(19) Europäisches Patentamt
European Patent Office
Office européen des brevets

(11) **EP 2 662 821 A2**

(12) **EUROPEAN PATENT APPLICATION**
published in accordance with Art. 153(4) EPC

(43) Date of publication:
**13.11.2013   Bulletin 2013/46**

(51) Int Cl.:
***G06Q 50/00*** *(2012.01)*

(21) Application number: **11855197.7**

(22) Date of filing: **30.12.2011**

(86) International application number:
**PCT/KR2011/010385**

(87) International publication number:
**WO 2012/093815 (12.07.2012 Gazette 2012/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.01.2011   KR 20110000651**

(71) Applicant: **Olaworks, Inc.
Seoul 135-919 (KR)**

(72) Inventors:
• **KIM, Tae Hoon
Gumi-dong, Bundang-gu
Seongnam-si, Gyeonggi-do 463-708 (KR)**

• **PARK, Min Je
Dochon-dong, Jungwon-gu
Seongnam-si , Gyeonggi-do 462-080 (KR)**
• **CHEON, Se Uk
Seoul 135-796 (KR)**

(74) Representative: **Goddar, Heinz J. et al
Boehmert & Boehmert
Pettenkoferstrasse 20-22
80336 München (DE)**

(54) **METHOD, SYSTEM, AND COMPUTER-READABLE RECORDING MEDIUM FOR RECOMMENDING OTHER USERS OR OBJECTS BY CONSIDERING PREFERENCE OF AT LEAST ONE USER**

(57)    A method for recommending other users having a preference similar to the preference of a specific user includes the steps of: (a) obtaining information of objects which are selected by the specific user and other arbitrary users; (b) obtaining topic information by grouping the information of the objects; (c) determining which topic information corresponds to the specific user and other arbitrary users; (d) obtaining user similarity for each other user which corresponds to the sum of the probabilities of the specific object with respect to all the topic information in the state of each corresponding topic information while the k-th other user and the specific user have arbitrary topic information of the first to the n-th topic information and a specific object in each state of the corresponding topic information; and (e) recommending other specific user having the high user similarity among the first to the r-th users, as the user having the preference similar to the preference of the specific user.

[Fig. 2]

EP 2 662 821 A2

## Description

### Technical Field

The present invention relates to a method, a system and a computer-readable recording medium for recommending other users or objects by considering the preference of at least one user and more specifically to the method, the system, and the computer-readable recording medium, wherein information that is pre-selected respectively by a specific user and random users is acquired. Then, information obtained upon grouping the acquired information on objects in reference to the characteristics of each object is acquired as topic information and then it is determined to which topic information the specific user and the random others correspond. User similarity between the specific user and the other users for each other user is evaluated in reference to corresponding relationships between the user and the random other user and topic information and corresponding relationships between topic information and object information, and a specific other user with a high degree of user similarity among the random users is recommended as a user with a similar preference to the specific user. Or, a degree of object similarity between the specific user and each object is evaluated in reference to corresponding relationships between the specific user and the topic information and the object information, a specific object which ranks top in terms of the degree of object similarity as a specific object with high relevance to the specific user is determined and then the specific object is recommended to the specific other user with high relevance to the specific user so that other users or objects may be recommended more widely and more accurately.

### Background Technology

Due to the dramatic development of Internet technologies, social networking services (SNS) which provide a variety of services by establishing and using a network among users via the Internet have recently received much attention.
In particular, one of the most essential functions of the SNS is to introduce many other users to a specific user and gives the specific user a chance to widen his or her social network (so called, a function of recommending friends). One of the existing technologies, which has been introduced many times, is a friend recommendation technology for analyzing the information on objects which users take interest in and recommending other users with similar preferences to a specific user. For example, if user A mainly visits Starbucks and Coffee Bean among various coffee shops and user B mainly visits Tom N Toms and Pascucci while user C mainly visits Starbucks and Caffebene, the technology is to recommend the user C who is considered to have more similar preference to the user A to the user A.
However, in case of the existing technology which simply used corresponding relationships between users and objects, because the types of objects are too vast, one same specific object was not very frequently selected. Therefore, it was really difficult to find users with similar preference. In other words, in the aforementioned example, if there is no coffee shop in which the users A, B and C are commonly interested, even though the users A, B and C like coffee, the users were classified as users with dissimilar preference, which was a problem. If it is assumed that there are various types of products beyond coffee shops having relatively fewer types, users might face the problem more seriously.
Accordingly, the applicant of the present invention came to develop a technology for introducing a concept of topic which is a more comprehensive concept than a concept of object to thereby evaluate degrees of similarity between each user more widely and supporting the recommendation of a specific object with a common preference to a specific user to other users who have similar preference to the specific user.

### Detailed Description of the Invention

### Technical Task

The objective of the present invention is to solve all the problems described above.
Another objective of the present invention is to be able to acquire information on topics by dividing objects into groups in reference to common characteristic(s) of each object selected by users and find other users with similar preference to a specific user more widely and more accurately by using topic information, such as a parameter.
It is still another objective of the present invention to be able to determine the object to be recommended more quickly and more accurately by using topic information in recommending the pre-selected object by a specific user to other users who have similar preference to the specific user.

### Means of Task Resolution

In the following, a representative configuration of the present invention for achieving the above objectives is described.

In accordance with one aspect of the present invention, a method is provided for recommending other users who have similar preferences with a specific user comprising of, (a) a step in which information on selected objects, respectively, by a specific user and random users is acquired, wherein the random users include 1-st to r-th other users while the objects include 1-st to s-th objects and a specific object is selected among the 1-st to s-th objects by the specific user, (b) a step in which the object information is grouped by referring to the characteristics of each object is acquired as topic information wherein the topic information includes 1-st to n-th topics, (c) a step in which it is determined to which topic the specific user and the random users respectively correspond, (d) a step in which a degree of user similarity for each other user corresponding to the sum of probabilities of the specific object appearing in the state of an applicable topic information while the k-th other user and the specific user have random topic information among the 1-st to n-th topic information, which shows a probability of the k-th other user among the random other user and the specific user having selected the specific object at the same time is evaluated by referring to corresponding relationships between the specific user and the arbitrary other user and the topic information and corresponding relationships between the topic information and the object information wherein the k is one or more and r or less, and (e) a step in which specific users, among the 1-st to r-th users who are ranked in top levels in terms of the degree of user similarity who have similar preference to the specific user, are recommended to the specific user.

In accordance with another aspect of the present invention, is a method provided for recommending a specific object similar to the preference of the specific user to other users comprising of, (a) a step in which information on the pre-selected object by the specific user among the entire object information is acquired, (b) a step in which information obtained upon grouping the entire object information in reference to the characteristics of each object is acquired as topic information wherein the topic information includes 1-st to n-th topics, (c) a step in which it is determined to which topic information the specific user corresponds by referring to the information on the pre-selected object by the specific user, (d) a step in which a degree of object similarity corresponding to the sum of probabilities of objects pre-selected by the specific user in the state of a random topic while the specific user has a random topic among the 1-st to n-th topic information, by referring to the corresponding relationship between the specific user and the topic information and corresponding relationship between the topic information and the object information is evaluated and then k specific objects which rank top k in terms of the degree of object similarity are determined as specific objects with the highest relevance to the specific user, and (e) a step in which information on the k specific objects is provided to the specific user by referring to the information on specific other user with the highest relevance to the specific user.

In accordance with yet another aspect of the present invention, is a method provided for recommending a specific object similar to the preference of the specific user to other users comprising of, (a) a step in which information on the pre-selected object by the specific user among the entire object information is acquired, (b) a step in which information obtained upon grouping the entire object information in reference to the characteristics of each object is acquired as topic information wherein the topic information includes 1-st to n-th topics, (c) a step in which it is determined to which topic information the specific user corresponds by referring to the information on the pre-selected object by the specific user, (d) a step in which top topic information which has top probabilities among respective probabilities of the specific user having the 1-st to n-th topic information is determined and then top k objects with top probabilities among respective probabilities of respective objects appearing with respect to the top h topic information are determined as specific h objects with the highest relevance to the specific user, by referring to corresponding relationship between the specific user and the topic information and corresponding relationship between the topic information and the object information, and (e) a step in which information on the k specific objects is provided to the specific user by referring to the information on the specific other user with the highest relevance to the specific user.

In accordance with yet another aspect of the present invention, a system is provided for recommending specific other users who have similar preferences with a specific user comprising of, a part that determines corresponding relationships by acquiring information on objects respectively pre-selected by the specific user and random users. Wherein the random users include 1-st to r-th other users, the object information include 1-st to s-th objects, and a specific object among the 1-st to s-th objects is selected by the specific user. Information obtained upon grouping the object information acquired by referring to the characteristics of each object is acquired as topic information to determine which topic information each specific user and the random users corresponds to, wherein the topic information includes 1-st to n-th topics. A part that evaluates similarity degree evaluates a degree of user similarity for each other user corresponding to the sum of probabilities of the specific object appearing in the state of an applicable topic information. The k-th other user and the specific user have random topic information among the 1-st to n-th topic information as a probability of the k-th other user among the random other user and the specific user having selected the specific object at the same time. This is evaluated by referring to corresponding relationships between the specific user and the arbitrary other user and the topic information and corresponding relationships between the topic information and the object information wherein the k is one or more and r or less, and a part that provides recommendation information recommends specific other users among the 1-st to r-th other users who are ranked in top levels in terms of the degree of user similarity as users who have similar preference to the specific user.

In accordance with yet another aspect of the present invention, a system is provided for recommending specific other users who have similar preference to a specific user comprising of, a part that determines corresponding relationships acquires information obtained upon grouping the entire object information in reference to the characteristics of each object as topic information wherein the topic information includes 1-st to n-th topics and then acquires information on a pre-selected object by the specific user among the entire object information and determines to which topic information the specific user corresponds by referring to the information on the pre-selected object by the specific user, a part that evaluates a degree of object similarity corresponding to sum of probabilities of objects pre-selected by the specific user appearing in the state of a random topic while the specific user has a random topic among the 1-st to n-th topic information, by referring to the corresponding relationship between the specific user and the topic information and the corresponding relationship between the topic information and the object information and then determines k specific objects which rank top k in terms of the degree of object similarity as specific objects with the highest relevance to the specific user, and a part that provides recommendation information on the k specific objects to the specific user by referring to the specific user by referring to the information on specific other user with the highest relevance to the specific user.

In accordance with yet another aspect of the present invention, a system is provided for recommending specific other user who have similar preference to a specific user comprising of, a part that determines corresponding relationships that acquires information obtained upon grouping the entire object information in reference to the characteristics of each object as topic information wherein the topic information includes 1-st to n-th topics and then acquires information on a pre-selected object by the specific user among the entire object information and determines to which topic information the specific user corresponds by referring to the information on the pre-selected object by the specific user. A part that evaluates the similarity degree determines top h topic information which has top probabilities among respective probabilities of the specific user having the 1-st to n-th topic information and then determines top k objects with top probabilities among respective probabilities of the h respective objects appearing with respect to the top h topic information as specific objects with the highest relevance to the specific user, by referring to the corresponding relationship between the specific user and the topic information and the corresponding relationship between the topic information and the object information, and a part that provides recommendation information that provides information on the k specific objects to the specific user by referring to the specific user by referring to the information on specific other user with the highest relevance to the specific user.

In addition, other methods, systems, and computer-readable recording media for recording a computer program to execute the methods that are intended to implement the present invention are further provided.

## Effects of the Invention

According to the present invention, information on a topic which is the concept for comprehensively including an object is used to evaluate the degree of similarity between a specific user and other users so that, if there are a great deal of object types, other users having a similar preference can be found more widely and more accurately.

In addition, according to the present invention, an object to be recommended can be determined more quickly and more accurately in recommending the pre-selected object by a specific user to other users who have similar preference to the specific user.

## Brief Description of the Drawings

Figure 1 is a drawing schematically representing the configuration of the whole system for recommending other specific users having similar preference to a specific user and a specific object in accordance with an example of the present invention.

Figure 2 is a drawing that illustrates the internal configuration of a user/object recommendation system (200) in accordance with an example of the present invention.

Figure 3 is a drawing that illustrates the corresponding relationships between a specific user and random users and topic information and the corresponding relationships between topic information and object information.

Figure 4 is a drawing that illustrates corresponding relationships between a specific user and topic information and corresponding relationships between topic information and object information.

<Description of Reference Numerals>

(100): network

(200): user/object recommendation system

(300): user terminal

(210): corresponding relationships determination part

(220): similarity degree evaluation part

(230): part that provides recommendation information

(240): communication part

(250): control part

**Embodiments of the Invention**

These examples are described in sufficient detail to enable those skilled in the art to practice the invention. It is to be understood that the various examples of the invention, although different, are not necessarily mutually exclusive. For example, a particular feature, structure, or characteristic described herein in connection with one example may be implemented within other examples without departing from the spirit and scope of the invention. In addition, it is to be understood that the location or arrangement of individual elements within each disclosed example may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In the following is described the present invention in detail referring to the preferred examples of the present invention so that those having common knowledge of the technical field to which the present invention belongs may easily practice the present invention.

[Preferred Examples of the Invention]

In the specification of the present invention, a topic (or topic information) may be understood to mean information on grouped objects with common characteristics acquired by referring to the characteristic of each object around users. For instance, if Sonata, Avanti, Mates and Genesis are objects selectable (or collectable) by a user, the objects have common characteristics: one is that they are all vehicles and the other is that they are made in Korea. Therefore, they may be classified to be applicable to the topic of vehicle and also applicable to the topic of made in Korea. By reference, the topic information may be characterized by being in a hidden state without being disclosed to users.

Configuration of the Whole System

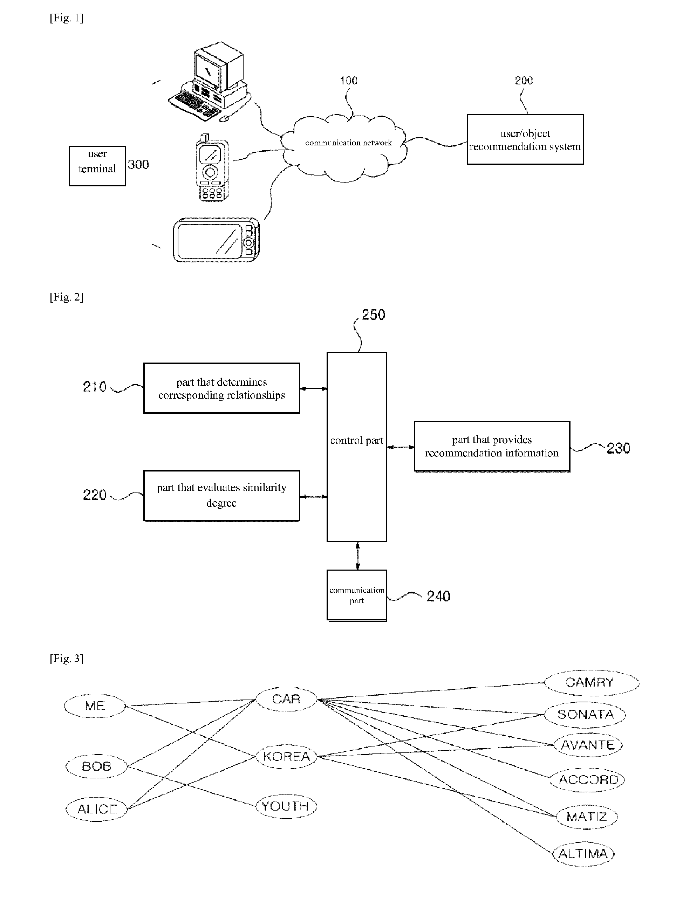

Figure 1 is a drawing schematically representing the configuration of the whole system for recommending other specific users having a similar preference to a specific user and a specific object in accordance with an example of the present invention.

As illustrated in Figure 1, the whole system in accordance with an example of the present invention may comprise a network (100), a user/object recommendation system (200) and a user terminal (300).

First, the network (100) in accordance with an example of the present invention may be configured regardless of its aspect such as wired or wireless and may be configured in a form of a mobile telecommunication network, a local area network (LAN), a metropolitan area network (MAN), a wide area network (WAN), an artificial satellite network and other diverse networks. More specifically, the network (100) in the present invention should be understood as a concept inclusive of all network services such as publicly known World Wide Web (www), Code Division Multiple Access (CDMA), Wideband Code Division Multiple Access (WCDMA), Global System for Mobile communications (GSM) and the like.

Next, the user/object recommendation system (200) in accordance with an example of the present invention may perform a function of acquiring information on pre-selected objects, respectively, by a specific user and random users as well as information on topics applicable to respective objects, and determining to which topic the specific user and the random users, respectively correspond based on the acquired information.

Furthermore, the user/object recommendation system (200) in accordance with an example of the present invention may also perform a function of determining a specific other user among the random users with a high relevance to the specific user and recommending the specific other user as a user with similar preference to the specific user by referring to corresponding relationships between the specific user and the random users, and topic information and also corresponding relationships between the topic information and object information.

Furthermore, the user/object recommendation system (200) in accordance with an example of the present invention may also perform a function of determining a specific object with a high relevance to the specific user by referring to corresponding relationships between the specific user and the random users, and the topic information and also corresponding relationships between the topic information and the object information and a function of recommending information on the specific object to specific other users with a high relevance to the specific user.

The detailed description on an internal configuration and components of the user/object recommendation system (200) will be given below. By reference, the user/object recommendation system (200) may also be configured separately or by integration of as a user recommendation system and an object recommendation system.

Next, the user terminal (300) in accordance with an example of the present invention, may perform a function of transmitting a request for selection to the user/object recommendation system (200) if a user selects an object the user is interested in and also a function of receiving and getting information on other users or objects recommended as those with similar preference to the user by the user/object recommendation system (200). Herein, a case may be assumed that the user selects information on a random object by collecting information thereon. A representative example of such a collection might be that each user creates a digital image of a random object by using a camera module, etc. of the user terminal (300) and registers its information but it is not limited thereto.

Furthermore, the user terminal (300) in accordance with an example of the present invention is a digital device which includes a function for accessing to the network (100) or the user/object recommendation system (200) and communicating with it. Such digital devices, including a personal computer (e.g., desktop, laptop, etc.), a workstation, a PDA, a web pad, a cellular phone, which have memory means and microprocessors with a operation ability, may be adopted as the user terminal (300) in accordance with the present invention.

Configuration of the User/Object Recommendation System

Figure 2 is a drawing that illustrates the internal configuration of a user/object recommendation system (200) in accordance with an example of the present invention.

By referring to Figure 2, the user/object recommendation system (200) may comprise a part that determines corresponding relationships (210), a part that evaluates similarity degree (220), a part that provides recommendation information (230), a communication part (240) and a control part (250).

In accordance with an example of the present invention, at least one part that determines corresponding relationships(210), the part that evaluates similarity degree (220), the part that provides recommendation information (230), the communication part (240) and the control part (250) may be included in the user/object recommendation system (200) or may be program modules communicating with the user/object recommendation system (200). In Figure 2, however, the user/object recommendation system (200) is illustrated to include the part that determines corresponding relationships(210), the part that evaluates similarity degree (220), the part that provides recommendation information (230), the communication part (240) and the control part (250). The program modules may be included in the user/object recommendation system (200) in a form of an operating system, an application program module and other program module and may be also stored on several known memory devices physically. Furthermore, the program modules may be stored on remote memory devices that can communicate with the user/object recommendation system (200). Such program modules include but are not limited to a routine, a subroutine, a program, an object, a component, and a data structure for executing a specific operation or a type of specific abstract data that will be described in accordance with the present invention.

First of all, in accordance with a first example of the present invention, the part that determines corresponding relationships (210) may perform a function of acquiring information on objects pre-selected separately by a specific user and random users, acquiring group information as topic information by referring to a characteristic(s) of each object and determining to which topic the specific user and the random users correspond. As such, in order to acquire information on objects pre-selected respectively by a specific user and random users and to acquire information obtained upon grouping the acquired object information as topic information, the part that determines corresponding relationships (210) may be linked with a database (not illustrated) where information on users and objects and information on the relationships of selection between the users and the objects is recorded. On the other hand, the specification hereinafter will be described assuming the case that the random users include 1-st to r-th users; the objects include 1-st to s-th objects; and the specific user has already selected at least one specific object among the 1-st to s-th objects.

Next, to obtain the probability of a k-th other user (where k is 1 or more and r or less) among the random users having selected a specific object at the same time with the specific user by referring to corresponding relationships between information on the specific user and the random users, and the topic information and corresponding relationships between the topic information and the object information, the part that evaluates similarity degree (220) in accordance with the first example of the present invention may perform a function of acquiring a degree of user similarity by each random other user which is relevant to a value equivalent to sum of all the probabilities of the specific object appearing in the state of each topic information, while the k-th other user and the specific user respectively have random topic information among 1-st to n-th topic information.

More specifically, the part that evaluates similarity degree (220) may obtain the degree of user similarity by multiplying the value equivalent to sum of all the probabilities of the specific object appearing in the state of each topic information. The k-th other user and the specific user respectively have the random topic information among 1-st to n-th topic information by a probability of the specific object appearing independently (i.e., a concept of frequency as the probability of the specific object appearing among the entire objects recorded on a database (not illustrated)). Herein, the probability of the k-th other user and the specific user having random topic information among 1-st to n-th topic information may be calculated by multiplying the probability of the k-th other user having random topic information among 1-st to n-th topic information by a probability of the specific user having random topic information among 1-st to n-th topic information.

A process of evaluating such a degree of user similarity may be expressed in the mathematical formula 1 as follows:

[Mathematical Formula 1]

$$P(U,O) = P(O) \sum_{T} P(O|T)P(T|U)$$

As seen in the mathematical formula 1, P(U,O) as the probability of a user (U) having selected a specific object (O) may be calculated by multiplying the sum of each probability (P(O|T)) of the specific object appearing in the state of information on each topic while the specific user has random topic information among 1-st to n-th topics (P(T|U)) by the probability of the specific object appearing independently (P(O)). Based on this, a process of obtaining the probability of the k-th other user having selected the specific object at the same time with the specific user is described below by referring to Figure 3.

Figure 3 is a drawing that illustrates corresponding relationships between a specific user and random users and topic information and corresponding relationships between topic information and object information.

By referring to Figure 3, a user "me" selected objects: Camry, Sonata and Avante while another user "Bob" selects Accord and the other user "Alice" selects Matiz and Altima. The part that determines corresponding relationships (210) may acquire topic information relating to the information on the above-mentioned pre-selected objects (e.g., a topic of car or a topic of Korea is applicable. A topic of youth does not correspond to the above objects) and the relating corresponding relationships, and the part that evaluates similarity degree (220) may determine to which other user the specific user with respect to the specific objects has a high relevance by using such corresponding relationships (i.e., high degrees of user similarity).

For instance, in the case of a parameter Sonata pre-selected by the specific user "me", P(Sonata, me, Bob) as a degree of user similarity between the specific user "me" and the another user "Bob" (i.e., the probability of "me" and "Bob" having selected Sonata at the same time) and P(Sonata, me, Alice), as a degree of user similarity between the specific user "me" and the other user "Alice" (i.e., the probability of "me" and "Alice" having selected Sonata at the same time) may be calculated by using the mathematical formula 1 as below. Herein, it could be found out that all related topics (i.e., car and Korea) are used as parameters in obtaining the probabilities below:

1) P(sonata, me, bob)
= P(sonata) * (P(car|me, bob) * P(sonata|car) + P(korea|me, bob) * P(sonata|korea))
= P(sonata) * (P(car|me) * P(car|bob) * P(sonata|car) + P(korea|me) * P(korea|bob) * P(sonata|korea))
= 1/6 * (1/2 * 1/2* 1/6 +1/2 * 0 *1/3)
= 1/144

2) P(sonata, me, alice)
= P(sonata) * (P(car|me, alice) * P(sonata|car) + P(korea|me,alice) * P(sonata|korea))
= P(sonata) * (P(car|me) * P(car|alice) * P(sonata|car) + P(korea|me) * P(korea|alice) * P(sonata|korea))
= 1/6 * (1/2 * 1/2* 1/6 +1/2 * 1/2 *1/3)
= 1/48

In conclusion, if Sonata is used as a parameter, it is calculated that other user "Alice" rather than "Bob" has a higher degree of similarity with the specific user "me". This is because, while "Alice" is much interested in the car and Korea topics just as "me", "Bob" is interested in the car topic as well as the youth topic instead of the topic Korea.

On the other hand, at the part that evaluates similarity degree (220) in accordance with the first example of the present invention, the m:n matching may be assumed to compare the preferences of the whole number of multiple specific users with those of other users to obtain degrees of user similarity and then recommend similar other users by expanding the above-described concept of degrees of user similarity calculated by the l:n matching with a single specific user.

To calculate the degree of user similarity for such m:n matching, a mathematical formula 2 may be used.

[Mathematical Formula 2]

$$P(O, U_1, U_2, ..., U_m, U^*)$$
$$= P(O) \sum_T P(O|T)P(T|U_1, U_2, ..., U_m, U^*)$$
$$= P(O) \sum_T P(O|T)P(T|U_1) \cdots P(T|U_m) \, P(T|U^*)$$

If 1-st to m-th specific users are included in the specific user, the part that evaluates similarity degree (220), as shown in the mathematical formula 2, may find the probability of each specific user having random topic information and multiply each of such probabilities (P(T|U1)*.. *P (T|Um)) to find the probability of 1-st to m-th specific users having random topic information among 1-st to n-th topic information, and multiply such probabilities by the probability p (T|U*) of a random other user (that is, U*) having random topic information to find the probability of the other user (U*) and 1-st to m-th specific users having random topic information among 1-st to n-th topic information, and, based on the above, evaluate degrees of user similarity between the multiple specific users and the other user (U*). By repeating the above process for each other user, other users with a high degree of user similarity may be determined.

Next, the part that provides recommendation information (230) in accordance with the first example of the present invention may perform a function of recommending the specific other user whose value of user similarity is highest among the 1-st to r-th other users as user with similar preference to the specific user.

Next, the communication part (240) in accordance with the first example of the present invention may perform a function of allowing the user/object recommendation system (200) to communicate with external devices such as the user terminal (300).

Next, the control part (250) in accordance with the first example of the present invention performs a function of controlling data flow among the part that determines corresponding relationships (210), the part that evaluates similarity degree (220), the part that provides recommendation information (230) and the communication part (240). In other words, the control part (250) controls the flow of data from outside or among the components of the user/object recommendation system (200) to make the part that determines corresponding relationships (210), the part that evaluates similarity degree (220), the part that provides recommendation information (230) and the communication part (240) to perform their unique functions.

In accordance with the first example of the present invention, the method for recommending a specific other user with similar preference to the specific user was explained above. Now, a method for recommending a specific object with similar preference to the specific user to other users will be described below in accordance with a second example of the present invention.

First, the part that determines corresponding relationships (210) in accordance with the second example of the present invention, this part may perform a function of acquiring information obtained upon grouping the whole objective information (which includes 1-st to n-th topics) by referring to the characteristics of each object, getting information on the pre-selected object(s) by the specific user among the information on the entire objects and determining to which topic information the specific user corresponds by referring to the information on the pre-selected object(s) by the specific user. Thus, in order to acquire information on the pre-selected object by a specific user among the whole object information and to determine to which topic information the specific user corresponds by referring to the information on the pre-selected object by such specific user, the part that determines corresponding relationships (210) may be linked with a database (not illustrated) where the information on users and objects and the relationships of preselection between the users and the objects are recorded.

Next, the part that evaluates similarity degree (220) in accordance with the second example of the present invention may perform a function of computing a degree of object similarity corresponding to a value equivalent to the sum of respective probabilities of respective objects pre-selected by the specific user appearing at the state of a random topic while the specific user has random topic among 1-st to n-th topics by referring to corresponding relationships between the specific user and the topic information and corresponding relationships between the topic information and the object information determined by the part that determines corresponding relationships (210) and then determining k specific objects which rank top k in terms of the degree of object similarity as appropriate specific objects with top k relevance to the specific user. The method for determining the specific object with top k relevance to the specific user is not limited to the aforementioned method and the part that evaluates similarity degree (220) in accordance with the second example of the present invention may first determine information on top h topics with top h probabilities among probabilities of the specific user having respective topics among the 1-st to the n-th topics by referring to corresponding relationships between the specific user and the topic information and those between the topic information and the object information and then consider top k specific objects of which probabilities are top k with respect to the top h topics as specific objects with the highest relevance to the specific user.

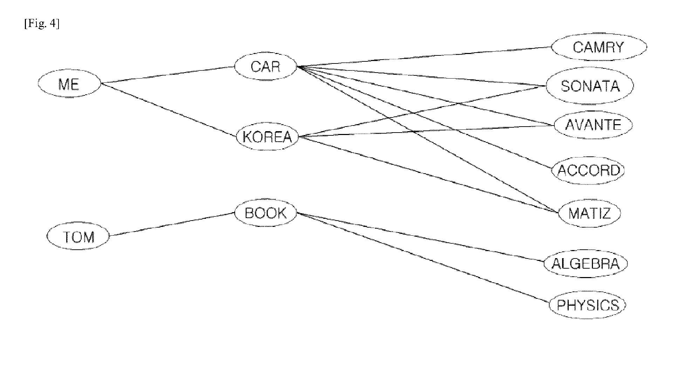

Figure 4 is a drawing that illustrates the corresponding relationships between a specific user and topic information and corresponding relationships between topic information and object information.

By referring to Figure 4, to describe the course of determining a specific object with the highest relevance to the specific user "me" the part that evaluates similarity degree (220) in accordance with the second example of the present invention, the part that evaluates similarity degree (220) may calculate a degree of object similarity corresponding to the sum of the probabilities of respective objects pre-selected by the specific user "me" appearing at the state of a random topic while the specific user "me" has the random topic among the car topic, Korea topic and book topic as follows:

1) P(camry, me)

$$
\begin{aligned}
&= P(car|me) * P(camry|car) + P(korea|me) * P(camry|korea) + P(book|me) * P(camry|book) \\
&= 1/2 * 1/5 + 1/2 * 0 + 0 * 0 \\
&= 1/10
\end{aligned}
$$

2) P(sonata, me)

$$
\begin{aligned}
&= P(car|me) * P(sonata|car) + P(korea|me) * P(sonata|korea) + P(book|me) * P(sonata|book) \\
&= 1/2 * 1/5 + 1/2 * 1/3 + 0 * 0 \\
&= 4/15
\end{aligned}
$$

3) P(avante, me)

$$
\begin{aligned}
&= P(car|me) * P(avante|car) + P(korea|me) * P(avante|korea) + P(book|me) * P(avante|book) \\
&= 1/2 * 1/5 + 1/2 * 1/3 + 0 * 0 \\
&= 4/15
\end{aligned}
$$

4) P(accord, me)

$$
\begin{aligned}
&= P(car|me) * P(accord|car) + P(korea|me) * P(accord|korea) + P(book|me) * P(accord|book) \\
&= 1/2 * 1/5 + 1/2 * 0 + 0 * 0 \\
&= 1/10
\end{aligned}
$$

5) P(matiz, me)

$$
\begin{aligned}
&= P(car|me) * P(matiz|car) + P(korea|me) * P(matiz|korea) + P(book|me) * P(matiz|book) \\
&= 1/2 * 1/5 + 1/2 * 1/3 + 0 * 0 \\
&= 4/15
\end{aligned}
$$

6) P(Algebra, me)

$$= P(car|me) * P(Algebra|car) + P(korea|me) * P(Algebra|korea) + P(book|me) *$$
$$P(Algebra|book)$$
$$= 0 * 0 + 0 * 0 + 0 * 1/2$$
$$= 0$$

7) P(Physics, me)

$$= P(car|me) * P(Physics|car) + P(korea|me) * P(Physics|korea) + P(book|me) *$$
$$P(Physics|book)$$
$$= 0 * 0 + 0 * 0 + 0 * 1/2$$
$$= 0$$

In conclusion, Sonata, Avante and Matiz which have the highest degrees of object similarity are determined as specific objects with the highest relevance to the specific user "me", because Sonata, Avante and Matiz correspond to topic car and Korea topic in which "me" is interested.

As described above, the degree of object similarity between the user "me" and the object "Algebra" and the object "Physics" are zero respectively because the user "me" is not interested in a topic book to which Algebra and Physics pertain at all. In accordance with the second example of the present invention, the part that evaluates similarity degree (220) may first determine information on top 2 topics (topics car and Korea) with the highest probability of "me" corresponding to a topic among the topics of car, Korea and book and then decide a specific object which has a high probability of appearing only with respect to such topic information as a specific object with the highest relevance to the specific user "me" so as to reduce the number of overall operations. By reference, as such, it may provide services including offering information on several specific objects with the highest relevance to the specific user "me" to other users with the highest relevance to the specific user and this would be applied even to an example below as is.

Furthermore, the part that evaluates similarity degree (220), in accordance with the second example of the present invention, may also perform a function of deciding a specific object with the highest relevance to multiple specific users by expanding the concept of 1:n matching between a user and objects if the specific user includes multiple users of 1-st to m-th specific users.

More specifically, the part that evaluates similarity degree (220) in accordance with the second example of the present invention may acquire respective probabilities of respective specific users having an x-th topic information (where x is 1 or more and n or less) and then a probability of the 1-st to m-th specific users having the x-th topic at the same time among the 1-st to n-th topic information by multiplying the already acquired respective probabilities to thereby determine information on top h topics with high probabilities among the probabilities of the 1-st to m-th specific users, respectively, by having the 1-st to n-th topic information and then decide top k objects with top k probabilities of respective objects appearing with respect to the top h topics as specific objects with the highest relevance to the multiple specific users. But it is not limited to this and various modified example may be considered.

Finally, the part that provides recommendation information (230) in accordance with the second example of the present invention may perform a function of selecting another user with a high relevance to the specific user and providing information on the top k specific objects with high relevance to the specific users to the specific other user. The first example of the present invention as explained above may be applied to the course in which the part that provides recommendation information (230) selects a specific other user with a high relevance to the specific user but it is not limited to this and various modified example may be considered.

The examples described above according to the present invention can be implemented in a form of program command that may be executed through a variety of computer components and recorded on a computer-readable recording media. The computer readable media may include program commands, data files and data structures, solely or in combination, The program commands recorded on the computer-readable recording medium may be specially designed and configured for the present invention or may be known to and usable by a person skilled in the field of computer software. Examples of the computer-readable recording medium include magnetic media such as hard disk, floppy disk, and magnetic tape, optical media such as CD-ROM and DVD, include magnetic media such as hard disk, floppy disk, magnetic tape, optical media such as CD-ROM and DVD, magneto-optical media such as floptical disk and hardware devices such as ROM, RAM and flash memory specially configured to store and execute program commands. Program commands include not only a machine language code made by a complier but also a high level code that can be used by an interpreter etc., which is executed by a computer. The hardware device may be configured to work as one or more software modules to perform the action according to the present invention, and its reverse is also the same.

While the present invention has been described so far by certain details such as specific components and limited examples and drawings, they were merely provided to promote an overall understanding of the present invention, and the present invention is not limited by the examples above. A person with the common knowledge of the field to which the present invention belongs may attempt various modifications and changes based on such description.

Therefore, the thoughts of the present invention must not be confined to the explained examples, and the claims to be described later as well as all variations, equal or equivalent to the claims would belong to the category of the thoughts of the present invention.

## Claims

1. A method for recommending specific other users who have similar preference to a specific user comprising of,

   (a) a step in which a system acquires information on selected objects, respectively, by a specific user and random users, wherein the random users include 1-st to r-th other users while the objects include 1-st to s-th objects and a specific object is selected among the 1-st to s-th objects by the specific user,
   (b) a step in which the system acquires the object information grouped by referring to the characteristics of each object as topic information wherein the topic information includes 1-st to n-th topics,
   (c) a step in which the system determines to which topic the specific user and the random users respectively correspond,
   (d) a step in which the system evaluates a degree of user similarity for each other user, corresponding to the sum of probabilities of the specific object appearing in the state of an applicable topic information. The k-th other user and the specific user have random topic information among the 1-st to n-th topic information for all the topic information as a probability of the k-th other user among the random other user and the specific user having selected the specific object at the same time by referring to corresponding relationships between the specific user and the arbitrary other user and the topic information and corresponding relationships between the topic information and the object information wherein the k is one or more and r or less, and
   (e) a step in which the system recommends specific other users among the 1-st to r-th other users who are ranked in top levels in terms of the degree of user similarity as users who have similar preference to the specific user,

   wherein the degree of user similarity in step (d) is evaluated by multiplying the sum of probabilities of the specific object appearing in the state of an applicable topic information while the k-th other user and the specific user have random topic information among the 1-st to n-th topic information with the probability of the specific object appearing independently.

2. The method recited in Claim 1, wherein the probability of the k-th other user and the specific user having random topic information among the 1-st to n-th topic information is evaluated by the product between the probability of the k-th other user having random topic information among the 1-st to n-th topic information and the probability of the specific user having random topic information among the 1-st to n-th topic information.

3. The method recited in Claim 1, wherein the topic information is in a hidden state that is not disclosed to the specific user and the random users.

4. The method recited in Claim 1, wherein, in the step (a), if the specific user or the random other user respectively performs collection of information on a random object separately, the specific user on the random other user is handled to have pre-selected the applicable object information.

5. The method recited in Claim 4, wherein the collection is performed when the specific user or the random other user respectively generates a digital image of a random object and registers information thereon.

6. The method recited in Claim 1, wherein the specific user includes multiple users.

7. The method recited in Claim 6, wherein the probability of the k-th other user and the specific user having random topic information among the 1-st to n-th topic information is evaluated by the product between the probability of the k-th other user having random topic information among the 1-st to n-th topic information and the probability of the specific user having random topic information among the 1-st to n-th topic information.

8. The method recited in Claim 7, wherein, if the specific user includes 1-st to m-th specific user, the probability of the specific user having random topic information among the 1-st to n-th topic information is evaluated by evaluating the probability for each of the specific users having the random topic information and then multiplying each of the probabilities evaluated.

9. A method for recommending specific other users who have similar preference to a specific user comprising of,

    (a) a step in which a system acquires information on the pre-selected object by the specific user among the entire object information,
    (b) a step in which the system acquires information obtained upon grouping the entire object information in reference to the characteristics of each object as topic information wherein the topic information include 1-st to n-th topics,
    (c) a step in which the system determines to which topic information the specific user corresponds by referring to the information on the pre-selected object by the specific user,
    (d) a step in which the system evaluates a degree of object similarity corresponding to sum of probabilities of objects pre-selected by the specific user appearing in the state of a random topic while the specific user has a random topic among the 1-st to n-th topic information, by referring to corresponding relationship between the specific user and the topic information and corresponding relationship between the topic information and the object information and then determines k specific objects which rank top k in terms of the degree of object similarity as specific objects with the highest relevance to the specific user, and
    (e) a step in which the system provides information on the k specific objects to the specific user by referring to the information on specific other user with the highest relevance to the specific user,

    wherein, if the specific user includes multiple users of 1-st to m-th specific users, a degree of object similarity corresponding to sum of probabilities of objects pre-selected by the 1-st to m-th specific users appearing in the state of random topic information while the 1-st to m-th specific users have random topic information among the 1-st to n-th topic information, the evaluated and objects which rank top k in terms of the degree of object similarity among them are determined as top k specific objects.

10. A method for recommending specific other users who have similar preference to a specific user comprising of,

    (a) a step in which a system acquires information on the pre-selected object by the specific user among the entire object information,
    (b) a step in which the system acquires information obtained upon grouping the entire object information in reference to the characteristics of each object as topic information wherein the topic information include 1-st to n-th topics,
    (c) a step in which the system determines to which topic information the specific user corresponds by referring to the information on the pre-selected object by the specific user,
    (d) a step in which the system determines top h topic information which has top probabilities among respective probabilities of the specific user having the 1-st to n-th topic information and then determines top k objects with top probabilities among respective probabilities of respective objects appearing with respect to the top h topic information as specific objects with the highest relevance to the specific user, by referring to corresponding relationship between the specific user and the topic information and corresponding relationship between the topic information and the object information, and
    (e) a step in which the system provides information on the k specific objects to the specific user by referring to the information on specific other user with the highest relevance to the specific user,

    wherein, if the specific user includes multiple users of 1-st to m-th specific users, top h topic information which has top probabilities among respective probabilities of the 1-st to m-th specific users having the 1-st to n-th topic information is determined, and then top k objects with top probabilities among respective probabilities of respective objects appearing with respect to the top h topic information are determined as top k specific objects.

11. The method recited in Claim 9, wherein the probability of the 1-st to m-th specific user having x-th topic information among the 1-st to n-th topic information is evaluated by evaluating the probability for each of the specific users having the x-th topic information and then multiplying each of the probabilities evaluated.

12. A system for recommending specific other users who have similar preference to a specific user comprising of,
    a part that determines corresponding relationships that acquires information on objects respectively pre-selected by the specific user and random users wherein the random users include 1-st to r-th other users, the object information include 1-st to s-th objects, and a specific object among the 1-st to s-th objects is selected by the specific user, and information obtained upon grouping the object information acquired by referring to the characteristics of each object is acquired as topic information to determine to which topic information each of the specific user and the random users corresponds wherein the topic information includes 1-st to n-th topics, a part that evaluates similarity degree that evaluates a degree of user similarity for each other user corresponding to sum of probabilities of the specific object appearing in the state of an applicable topic information while the k-th other user and the specific user have random topic information among the 1-st to n-th topic information for cell the topic information as a probability of the k-th other user among the random other user and the specific user having selected the specific object at the same time is evaluated by referring to corresponding relationships between the specific user and the arbitrary other user and the topic information and corresponding relationships between the topic information and the object information wherein the k is one or more and r or less, and a part that provides recommendation information that recommends specific other users among the 1-st to r-th other users who are ranked in top levels in terms of the degree of user similarity as users who have similar preference to the specific user,

wherein the part that evaluates similarity degree evaluates the degree of user similarity by multiplying the probability of the specific object appearing in the state of random topic information while the k-th other user and the specific user have random topic information among the 1-st to n-th topic information with the probability of the specific object appearing independently.

13. The system recited in Claim 12, wherein the part that evaluates similarity degree evaluates the probability of the k-th other user and the specific user having random topic information among the 1-st to n-th topic information by multiplying the probability of the k-th other user having random topic information among the 1-st to n-th topic information with the probability of the specific user having random topic information among the 1-st to n-th topic information.

14. The system recited in Claim 12, wherein the topic information is in a hidden state that is not disclosed to the specific user and the random users.

15. The system recited in Claim 12, wherein the correspondence relations determining part, if the specific user or the random other user respectively performs collection of information in a random object separately, handles such that the specific user or the random other user has pre-selected the applicable object information.

16. The system recited in Claim 15, wherein the collection is performed when the specific user or the random other user respectively generates a digital image of a random object and registers information thereon.

17. The system recited in Claim 12, wherein the specific user includes multiple users.

18. The system recited in Claim 17, wherein the part that evaluates similarity degree evaluates the probability of the k-th other user and the specific user having random topic information among the 1-st to n-th topic information by multiplying the probability of the k-th other user having random topic information among the 1-st to n-th topic information with the probability of the specific user having random topic information among the 1-st to n-th topic information.

19. The system recited in Claim 18, wherein, if the specific user includes multiple users of 1-st to m-th specific users, the part that evaluates similarity degree evaluates the probability for each of the specific users having the random topic information, and then multiplies each of the probabilities to evaluate the probability of the specific user having random topic information among the 1-st to n-th topic information.

20. A system for recommending specific other users who have similar preference to a specific user comprising of, a part that determines corresponding relationships that acquires information obtained upon grouping the entire object information in reference to the characteristics of each object as topic information wherein the topic information includes 1-st to n-th topics and then acquires information on a pre-selected object by the specific user among the entire object information and determines to which topic information the specific user corresponds by referring to the information on the pre-selected object by the specific user, a part that evaluates similarity degree that evaluates a degree of object similarity corresponding to sum of probabilities of objects pre-selected by the specific user appearing in the state of a random topic while the specific user has a random topic among the 1-st to n-th topic information, by referring to corresponding relationship between the specific user and the topic information and corresponding relationship between the topic information and the object information and then determines k specific objects which rank top k in terms of the degree of object similarity as specific objects with the highest relevance to the specific user, and a part that provides recommendation information that provides information on the k specific objects to the specific user by referring to the specific user by referring to the information on specific other user with the highest relevance to the specific user,

wherein if the specific user includes multiple users of 1-st to m-th specific users, the part that evaluates similarity degree evaluates a degree of object similarity corresponding to sum of probabilities of objects pre-selected by the 1-st to m-th specific users appearing in the state of random topic information while the 1-st to m-th specific users have random topic information among the 1-st to n-th topic information and determines objects which rank top k in terms of the degree of object similarity among them as top k specific objects.

21. A system for recommending specific other users who have similar preference to a specific user comprising of, a part that determines corresponding relationships that acquires information obtained upon grouping the entire object information in reference to the characteristics of each object as topic information wherein the topic information includes 1-st to n-th topics and then acquires information on a pre-selected object by the specific user among the entire object information and determines to which topic information the specific user corresponds by referring to the information on the pre-selected object by the specific user, a part that evaluates similarity degree determines top h topic information which has top probabilities among respective probabilities of the specific user having the 1-st to n-th topic information and then determines top k objects with top probabilities among respective probabilities of respective objects appearing with respect to the top h topic information as specific objects with the highest relevance to the specific user, by referring to corresponding relationship between the specific user and the topic information and corresponding relationship between the topic information and the object information, and a part that provides recommendation information that provides information on the k specific objects to the specific user by referring to the specific user by referring to the information on specific other user with the highest relevance to the specific user, wherein, if the specific user includes multiple users of 1-st to m-th specific users, the part that evaluates similarity degree determines top h topic information which has top probabilities among respective probabilities of the 1-st to m-th specific users having the 1-st to n-th topic information and then determines objects with top probabilities of respective objects appearing with respect to the top h topic information as top k specific objects.

22. System recited in Claim 21, wherein the part that evaluates similarity degree evaluates the probability for end of the specific users having x-th topic information among the 1-st to n-th topic information and then multiplies each of the evaluated probabilities to evaluate the probability of the 1-st to m-th specific users having the x-th topic information.

23. A computer-readable recording medium on which a computer program is recorded to execute the method according to any one of Claim 1 to Claim 11.

[Fig. 1]

[Fig. 2]

[Fig. 3]

[Fig. 4]